# EUROPÄISCHE PATENTSCHRIFT

(11) **EP 4 296 015 B1**
(45) Veröffentlichungstag und Bekanntmachung des Hinweises auf die Patenterteilung: **12.02.2025**
(21) Anmeldenummer: 22180154.1
(22) Anmeldetag: 21.06.2022
(51) Int. Cl.: B25J 13/08, B25J 15/02

(54) **DREHGREIFER**
ROTARY GRIPPER
PINCE ROTATIVE

(43) Veröffentlichungstag der Anmeldung: 27.12.2023
(73) Patentinhaber: Afag Holding AG, 6144 Zell (CH)
(72) Erfinder: Felder, Ramon, 4554 Etziken (CH); Durand, Friedrich, 4522 Rüttenen (CH); Frasch, Tobias, 78052 VS-Tannheim (DE); Schütz, Steffen, 67663 Kaiserslautern (DE)
(74) Vertreter: Lindner Blaumeier Patent- und Rechtsanwälte

(56) Entgegenhaltungen:
- DE-U1- 202018 006 092
- AFAG AUTOMATION AG, FIECHTENSTRASSE 32, CH - 4950 HUTTWIL (SCHWEIZ): "Drehgreifer DG 16 & DG 16 (Nullposition 90°) - Montage- und Betriebsanleitung - Rev. 3.0", 5 July 2020 (2020-07-05), pages 1 - 52, XP093002565, Retrieved from the Internet <URL:https://www.manualslib.de/manual/669148/Afag-Dg-16.html#manual> [retrieved on 20221128]

## Beschreibung

Die Erfindung betrifft einen Drehgreifer mit zwei Greifbacken und einem Betätigungsmittel, das durch ein Lagermittel, das insbesondere durch ein Gehäuse gebildet ist, entlang einem Verschiebepfad linear verschiebbar und um eine parallel zu dem Verschiebepfad verlaufende Rotationsachse rotierbar gelagert ist, wobei das Betätigungsmittel mit den Greifbacken derart bewegungsgekoppelt ist, dass die Greifbacken bei einer Verschiebung des Betätigungsmittels entlang dem Verschiebepfad in zueinander entgegengesetzte Richtungen verschoben und/oder verschwenkt werde, um verschiedene Greifstellungen einzunehmen, und dass eine Rotation des Betätigungsmittels um die Rotationsachse zu einer gemeinsamen Rotation der Greifbacken um die Rotationsachse führt.

Solche Drehgreifer, die beispielsweise dazu dienen, Bauteile in Produktions- bzw. Bestückungsprozessen zu greifen und zu rotieren, sind an sich wohlbekannt. Seitens der Anmelderin werden beispielsweise Drehgreifer mit den Modellbezeichnungen DG 16 und DG 20 angeboten. Die Nutzung eines gemeinsamen Betätigungsmittels für beide Bewegungsfreiheitsgrade ermöglicht hierbei einen besonders kompakten Aufbau. Aktuell im Markt übliche Modelle werden in der Regel pneumatisch betätigt. Prinzipiell können jedoch auch andere Aktoriken, beispielsweise eine unmittelbare elektro-motorische Betätigung oder eine hydraulische Betätigung, verwendet werden. Aus DE202018006092U1 ist zudem eine Linear-, Greif-, Spann-, Dreh- oder Schwenkvorrichtung mit einem Mikroprozessor, einem Grundgehäuse und wenigstens zwei Sensoren (z.B. Magnetfeld-, Beschleunigungs- und/ oder Gyrosensoren) bekannt, wobei der Mikroprozessor ausgebildet ist Ausgabesignale der wenigstens zwei Sensoren zu einem Signal zu fusionieren.

Beim Betrieb entsprechender Drehgreifer ist es häufig gewünscht, die Rotation und/oder die Greifbewegung zu überwachen. Dies kann beispielsweise gewünscht sein, um durch Nutzung eines Regelkreises gewünschte Greif- bzw. Rotationsstellungen mit höherer Genauigkeit zu erreichen, um die Funktion des Drehgreifers zu validieren, also beispielsweise ein Blockieren der Dreh- bzw. Greifbewegung zu erkennen, und/oder um nach- bzw. vorgelagerte Komponenten zu steuern, um sie mit den Greif- bzw. Drehbewegungen zu synchronisieren.

Bisher werden zur Erfassung der beiden Bewegungsfreiheitsgrade, also der Greif- und der Drehbewegung, separate Sensoren genutzt. Es ist hierbei bekannt, für beide Bewegungsfreiheitsgrade Magnetfeldsensoren zu nutzen, die als separate Bauteile in sogenannte C-Nuten an der Gehäuseaußenseite des Drehgreifers eingelegt und dort fixiert werden. Dieser Ansatz ist aus mehreren Gründen verbesserungswürdig:
Zum einen ist die korrekte Positionierung des jeweiligen Sensors in der jeweiligen Nut hochrelevant für die Messgenauigkeit, so dass das Anordnen von separaten Sensoren beim Aufbau einer einen Drehgreifer umfassenden Anlage im Feld relativ aufwändig ist. Zudem führt die Anordnung an der Gehäuseaußenseite dazu, dass die Sensoren relativ anfällig gegenüber störenden externen Feldern sind, so dass beispielsweise gegenüber Linearantrieben, die häufig gemeinsam mit Drehgreifern genutzt werden, eine aufwändige zusätzliche Abschirmung installiert werden muss. Zudem ist die bislang genutzte Sensorik relativ teuer.

Der Erfindung liegt somit die Aufgabe zugrunde, einen verbesserten Ansatz zur Erfassung der Greif- und Drehbewegung eines Drehgreifers anzugeben, wobei insbesondere der Montageaufwand und die Störanfälligkeit reduziert und Zusatzkosten zur Erfassung der genannten Größen gering gehalten werden sollen.

Die Aufgabe wird erfindungsgemäß durch einen Drehgreifer der eingangs genannten Art gelöst, wobei der Drehgreifer einen Magneten, einen Magnetfeldsensor und eine Verarbeitungseinrichtung aufweist, wobei der Magnet derart an dem Betätigungsmittel angebracht ist, dass eine Magnetisierungsrichtung gewinkelt, insbesondere senkrecht, zur Rotationsachse verläuft, wobei der Magnetfeldsensor derart ortsfest bezüglich des Lagermittels angeordnet ist, dass durch den Magnetfeldsensor das Magnetfeld des Magneten erfassbar ist, wobei der Magnetfeldsensor zur Erfassung von Komponenten der magnetischen Flussdichte des Magnetfelds für zumindest zwei Raumrichtungen eingerichtet ist, wobei die Verarbeitungseinrichtung dazu eingerichtet ist, in Abhängigkeit der erfassten Komponenten der magnetischen Flussdichte eine einen Drehwinkel der gemeinsamen Rotation der Greifbacken betreffende Rotationsinformation und eine die Greifstellung betreffende Greifinformation zu ermitteln.

Durch den gewinkelten bzw. insbesondere senkrechten Verlauf der Magnetisierungsrichtung zur Rotationsachse und die Erfassung von Komponenten der magnetischen Flussdichte für zwei Raumrichtungen kann zwischen einer Verschiebung des Magneten bezüglich des Magnetfeldsensors und somit des Lagermittels bzw. des Gehäuses und einer Rotation um die Rotationsachse unterschieden werden. Während eine Rotation des Magneten und somit des Betätigungsmittels und der Greifbacken zu einer Änderung der Feldrichtung führt, womit sich beispielsweise das Verhältnis der erfassten Komponenten zueinander ändert, führt eine Verschiebung des Magneten und somit des Betätigungsmittels und somit eine Greifbewegung der Greifbacken dazu, dass sich der Abstand von Magnetfeldsensor und Magnet ändert, wodurch die erfassten Komponenten gleichmäßig steigen oder fallen.

Durch die Messung der beiden Komponenten können die Bewegungsfreiheitsgrade separiert und somit sowohl die Rotationsinformation als auch die Greifinformation bereitgestellt werden, obwohl nur ein einziger Magnet genutzt wird. Da zudem Magnetsensoren, die mehrere Feldkomponenten erfassen können, relativ günstig und kleinbauend verfügbar sind, kann der erfindungsgemäße Drehgreifer mit relativ geringen Kosten hergestellt werden und die Erfassung der Rotationsinformationen und der Greifinformationen ist mit geringem Bauraumaufwand implementierbar.

Ein Beispiel für einen solchen Magnetfeldsensor ist der Baustein MLX90395 der Firma Melexis, der beispielsweise auch als SMD-Bauteil zur Verfügung steht und sogar Komponenten für drei senkrecht aufeinander stehende Raumrichtungen des magnetischen Feldes erfassen kann. Bei der Nutzung dieses Sensors hat es sich als vorteilhaft herausgestellt, die Feldstärke des Magneten und die entlang des Verschiebepfads minimal und maximal auftretenden Abstände zwischen Magnet und Magnetfeldsensor derart zu wählen, dass eine maximale Feldstärke von ca. 45 mT und eine minimale Feldstärke von ca. 12 mT am Sensor auftreten. Da mittlerweile jedoch eine Vielzahl verschiedener Magnetfeldsensoren mit unterschiedlichen Eigenschaften verfügbar ist, die zwei oder drei Komponenten der magnetischen Flussdichte erfassen können, sind bedarfsgerecht auch andere Feldstärkenbereiche nutzbar.

Es kann vorteilhaft sein, Komponenten der magnetischen Feldstärke für drei Raumrichtungen zu erfassen und auszuwerten, da hierdurch robust zwischen einer Änderung der Richtung der Feldlinie und einer Skalierung des Feldes aufgrund einer Abstandsänderung unterschieden werden kann. Da im erläuterten Drehgreifer vorzugsweise eine Einschränkung auf genau zwei Freiheitsgrade der Bewegung des Betätigungsmittels und damit des Magneten, nämlich die Drehbewegung um die Rotationsachse und die Verschiebung entlang dem Verschiebepfad, erfolgt, hat es sich in Vorversuchen als ausreichend herausgestellt, nur zwei Komponenten für gewinkelt zueinanderstehende Raumrichtungen auszuwerten.

Hierbei werden insbesondere zwei senkrecht aufeinander stehende Raumrichtungen, die beide senkrecht auf der Rotationsachse stehen, berücksichtigt. Genauigkeitseinbußen der Erfassung resultieren bei einer Berücksichtigung von Komponenten für nur zwei Raumrichtungen nur dann, wenn sich der Winkel der den Magnetfeldsensor durchsetzenden Feldlinien zu der durch die berücksichtigten Raumrichtungen aufgespannten Ebene, die insbesondere senkrecht auf der Rotationsachse steht, im Rahmen der Bewegung des Betätigungsmittels deutlich ändert. Dies ist bei der im Folgenden noch genauer erläuterten Ausgestaltung jedoch nur dann der Fall, wenn der Magnet sehr nahe an den Magnetfeldsensor herangeführt wird, was jedoch bei typischen Aufbauten nicht der Fall ist.

Das beschriebene Vorgehen ermöglicht es, die zur Rotations- und Greiferfassung erforderlichen Komponenten, nämlich den Magneten und den Magnetfeldsensor, bereits bei der Herstellung des Drehgreifers in diesen und insbesondere in dessen Gehäuse zu integrieren. Somit kann die eingangs erläuterte aufwändige Anordnung zusätzlicher Sensoren vermieden werden und es ist typischerweise auch keine separate Abschirmung erforderlich, da der Magnetfeldsensor bereits durch das Gehäuse des Drehgreifers selbst in der Regel hinreichend abgeschirmt ist.

Die Greifinformation und die Rotationsinformation können zur Validierung einer gewünschten Bewegung genutzt werden, beispielsweise um eine Blockade der Rotation bzw. des Greifens oder Loslassens zu erkennen und in diesem Fall ein Warnsignal auszugeben. Die Ausgabe des Warnsignals kann unmittelbar durch den Drehgreifer selbst, beispielsweise optisch oder akustisch, erfolgen oder es können übliche Kommunikationsschnittstellen genutzt werden, um eine entsprechende Information beispielsweise an eine zentrale Steuereinrichtung einer Maschine, die den Drehgreifer umfasst, zu melden.

Ergänzend oder alternativ kann die Greifinformation bzw. die Rotationsinformation jedoch beispielsweise auch zu Regelzwecken genutzt werden, um genauere Rotations- und/oder Greifbewegungen zu ermöglichen, und/oder dazu dienen, vor- bzw. nachgelagerte Vorrichtungen zu steuern, wie dies bereits eingangs diskutiert wurde. Anhand der Greifinformation kann beispielsweise auch erkannt werden, ob ein Gegenstand korrekt gegriffen wurde, da in diesem Fall die Greifbacken in einem gewissen Abstand voneinander gehalten werden, während bei einem Vorbeigreifen am Gegenstand die Greifbacken deutlich weiter zusammengefahren werden.

Die Greifinformation und die Rotationsinformation kann beispielsweise während einer Bewegung des Drehgreifers wiederfolgt erfasst werden, um den gesamten Bewegungspfad zu überwachen. Die erfassten Komponenten bzw. das Ergebnis, also die Greif- bzw. Rotationsinformation kann jedoch auch über mehrere Messungen gemittelt werden, um Störungen zu reduzieren. In diesem Fall kann es zweckmäßig sein, nur erreichte Endstellungen, an denen die Greifbacken stehen, zu überwachen, da während der Bewegung die Mittelung dazu führen würde, dass der aktuelle Zustand nicht korrekt wiedergegeben wird. Eine Mittelung kann insbesondere dann vorteilhaft sein, wenn aufgrund einer relativ geringen Abschirmung des Magnetfeldsensors gegen äußere Störfelder oder wegen starker äußerer Störfelder die Messung der Komponenten der durch den Magneten selbst bereitgestellten magnetischen Flussdichte beeinträchtigt ist.

Soweit vorliegend Ausrichtungen als parallel oder senkrecht beschrieben werden, sind hierbei toleranzbedingte Abweichungen möglich, wobei eine zulässige Abweichung insbesondere kleiner als 2° oder kleiner 1° oder kleiner als 0,5° sein kann.

Die Verarbeitungseinrichtung kann beispielsweise in einen den Magnetfeldsensor implementierenden Sensorbaustein, beispielsweise in einen IC, integriert sein oder als separates Bauteil innerhalb oder an dem Gehäuse des Drehgreifers angeordnet sein, beispielsweise auf einer Platine, die auch den Magnetfeldsensor trägt. Alternativ kann die Verarbeitungseinrichtung auch beabstandet von dem Drehgreifer bzw. von dessen Gehäuse angeordnet sein. Sie kann insbesondere auch dazu dienen, weitere Komponenten einer Maschine, die den Drehgreifer umfasst, zu steuern bzw. zu überwachen, beispielsweise Motoren, weitere Drehgreifer, etc.

Der Magnet kann an dem Betätigungsmittel angeklebt sein. Alternativ könnte er jedoch auch durch Umspritzen, Heißverstemmen oder Anschrauben an diesem befestigt sein. Das Betätigungsmittel kann insbesondere stangen- bzw. zylinderförmig sein.

Das Betätigungsmittel kann sich von einem mit den Greifbacken gekoppelten Ende in Richtung des Verschiebepfades bis zu einem von den Greifbacken abgewandten Ende erstrecken, wobei der Magnet an dem von den Greifbacken abgewandten Ende des Betätigungsmittels angeordnet ist, und insbesondere an einer von den Greifbacken abgewandten Stirnfläche des Betätigungsmittels angeordnet ist. Diese Anordnung ist besonders günstig, wenn der Magnetfeldsensor an der von den Greifbacken abgewandten Seite des Betätigungsmittels angeordnet ist. Eine solche Anordnung des Magnetfeldsensors kann vorteilhaft sein, da in diesem Fall kein Bauraumkonflikt mit der zur Bewegung des Betätigungsmittels genutzten Aktorik, beispielsweise mit Pneumatikkammern bzw. Kopplungsmitteln zur Ankopplung an einen elektromechanischen Aktor, auftritt. Insbesondere kann ein scheibenförmiger Magnet genutzt werden, dessen Magnetisierungsrichtung in der Ebene seiner Hauptflächen liegt. Alternativ kann jedoch auch ein Stabmagnet genutzt werden, dessen Pole vorzugsweise in einer Ebene senkrecht zur Rotationsachse liegen.

Das Betätigungsmittel kann zumindest an seinem von den Greifbacken abgewandten Ende aus einem Material gebildet sein, das eine relative magnetische Permeabilität von weniger als 4 oder weniger als 2 oder weniger als 1,5 aufweist. Durch eine hinreichend geringe magnetische Permeabilität in diesem Bereich kann erreicht werden, dass hierdurch die Feldführung des Magneten wenig beeinflusst wird, selbst dann, wenn das Material den Magneten seitlich zumindest teilweise umgreift. Die Nutzung von Material mit geringer Permeabilität in diesem Bereich ist insbesondere dann zweckmäßig, wenn das Betätigungsmittel an seinem Ende von einem Gehäuse bzw. allgemein einer Abschirmung mit höherer magnetischer Permeabilität umgeben ist, wie später noch erläutert wird. Würde in diesem Fall auch das Ende des Betätigungsmittels eine hohe magnetische Permeabilität aufweisen, würden die Feldlinien des Magneten unmittelbar zu diesem Gehäuse bzw. dieser Abschirmung geführt. Durch die Nutzung von Material niedriger magnetischer Permeabilität im genannten Bereich kann jedoch ein Bereich innerhalb eines solchen Gehäuses bzw. einer solchen Abschirmung, der den Magnet und den Magnetfeldsensor aufnimmt, eine im Wesentlichen ungestörte Feldführung zwischen diesen Komponenten ermöglichen.

Das Material kann insbesondere nur schwach paramagnetisch oder sogar schwach diamagnetisch sein. Beispielsweise kann die relative magnetische Permeabilität zwischen 0,9 und 1,1 liegen bzw. die Abweichung von einer relativen magnetischen Permeabilität von 1 kann sogar weniger als 10⁻³ oder 10⁻⁴ sein. Geeignete Materialien sind beispielsweise Messing, das je nach konkreter Legierung typischerweise schwach diamagnetisch ist, oder Aluminium, das schwach paramagnetisch ist.

Der Magnetfeldsensor kann an einer von den Greifbacken abgewandten Seite des Betätigungsmittels und in Richtung des Verschiebepfades von dem Betätigungsmittel beabstandet angeordnet sein. Insbesondere kann der Magnetfeldsensor in Richtung des Verschiebepfades zu dem Magnet versetzt angeordnet sein. Die Entfernung der Versetzung ist hierbei offensichtlich abhängig von der Verschiebestellung des Betätigungsmittels entlang dem Verschiebepfad, wobei diese jedoch vorzugsweise derart begrenzt ist, dass ein Kontakt zwischen Magnet und Magnetfeldsensor vermieden wird.

Steht die Magnetisierungsrichtung des Magneten im Wesentlichen senkrecht zum Verschiebepfad, so resultiert bei einer nicht allzu starken bzw. zumindest näherungsweise rotationssymmetrischen Feldbeeinflussung durch die weiteren Komponenten des Drehgreifers und bei nicht allzu geringem Abstand zwischen Magnetfeldsensor und Magneten ein Verlauf der Feldlinien im Bereich des Magnetfeldsensors im Wesentlichen senkrecht zur Rotationsachse. In diesem Fall ist es beispielsweise ausreichend, nur zwei Komponenten der magnetischen Flussdichte senkrecht zur Rotationsachse zu erfassen, um die Rotationsinformation und die Greifinformation mit hoher Genauigkeit zu ermitteln.

Zumindest ein Abschnitt des Betätigungsmittels kann in einem durch das oder ein Gehäuse des Drehgreifers gebildeten Aufnahmeraum aufgenommen sein, wobei der Magnetfeldsensor an einer von dem Aufnahmeraum abgewandten Seite einer Seitenwand des Aufnahmeraums angeordnet ist, wobei die Seitenwand zumindest abschnittsweise aus einem Material gebildet ist, das eine relative magnetische Permeabilität von weniger als 4 oder weniger als 2 oder weniger als 1,5 aufweist. Wie bereits obig für das Material des Endes des Betätigungsmittels erläutert, kann die relative magnetische Permeabilität insbesondere nur geringfügig von 1 abweichen, wobei auch hier die oben genannten Grenzen herangezogen werden können. Beispielsweise kann die Seitenwand aus Aluminium oder alternativ auch aus Messing gebildet sein.

Die Nutzung der Seitenwand, um den Magnetfeldsensor von dem Betätigungsmittel beziehungsweise dessen Aufnahmeraum zu trennen, ist insbesondere zweckmäßig, wenn die Verschiebung des Betätigungsmittels pneumatisch aktuiert ist. Beispielsweise kann durch den Aufnahmeraum eine Druckkammer gebildet werden, die durch einen Abschnitt des Betätigungsmittels nach Art eines Kolbens in zwei Teilkammern unterteilt wird. Durch Druckbeaufschlagung dieser Teilkammern kann das Betätigungsmittel somit pneumatisch verschoben werden, um die Greifbacken zu verschieben beziehungsweise zu verschwenken. Die Anordnung des Magnetfeldsensors außerhalb einer solchen Druckkammer kann einerseits mechanische Belastungen des Magnetfeldsensors beziehungsweise von mit diesem verbundenen elektrischen Komponenten vermeiden, die bei plötzlichen Druckwechseln beziehungsweise hieraus resultierenden Verwirbelungen auftreten können. Andererseits wird durch die Anordnung des Magnetfeldsensors außerhalb der Druckkammer die Abdichtung der Druckkammer erleichtert, da keine oder zumindest weniger elektrische Anschlussleitungen in die Druckkammer geführt werden müssen.

Die Seitenwand kann an ihrer von dem Aufnahmeraum abgewandten Seite beispielsweise eine Ausnehmung aufweisen, in die der Magnetfeldsensor eingreift beziehungsweise eingelegt ist. Beispielsweise kann der Magnetfeldsensor an einer der Seitenwand zugewandten Seite einer Platine angeordnet sein und von dieser in Richtung der Seitenwand abragen. Der Magnetfeldsensor kann an der Seitenwand abgestützt sein, um Vibrationen des Magnetfeldsensors bezüglich der Seitenwand beziehungsweise des Gehäuses beziehungsweise des Lagermittels zu vermeiden bzw. zu minimieren. Beispielsweise kann der Wärmeleitsensor zwischen der Seitenwand und einer Platine eingeklemmt sein, wobei zwischen Seitenwand und Magnetfeldsensor beispielsweise auch eine Wärmeleitfolie oder Ähnliches eingeklemmt sein kann, um Toleranzen auszugleichen.

Das oder ein Gehäuse des Drehgreifers kann eine erste Gehäusekomponente aufweisen, in die das Betätigungsmittel eingreift und die gemeinsam mit der als separates Bauteil ausgebildeten Seitenwand den Aufnahmeraum begrenzt, wobei an der von dem Aufnahmeraum abgewandten Seite der Seitenwand durch eine zweite Gehäusekomponente gemeinsam mit der Seitenwand ein weiterer Aufnahmeraum begrenzt wird, der den Magnetfeldsensor aufnimmt. Durch den beschriebenen Aufbau kann der Druckgreifer mit relativ geringem Aufwand montiert werden. Zudem kann durch geeignete Wahl des Materials der Gehäusekomponenten, insbesondere durch Nutzung von ferromagnetischen Materialien, eine robuste Abschirmung des Magnetfeldsensors gegenüber äußeren Feldern erreicht werden.

Der Verschiebepfad kann in einem Winkel von wenigstens 30° oder wenigstens 60°, insbesondere senkrecht, zu einer Ebene verlaufen, die durch die Raumrichtungen oder zweite Raumrichtungen, für die Komponenten des Magnetfelds durch den Magnetfeldsensor erfassbar sind, aufgespannt wird. Durch einen möglichst senkrechten Verlauf des Verschiebepfades zu der genannten Ebene kann die Empfindlichkeit der Erfassung maximiert werden. Dies gilt insbesondere dann, wenn die Magnetisierungsrichtung des Magneten im Wesentlichen in der genannten Ebene liegt, also näherungsweise senkrecht auf der Rotationsachse steht beziehungsweise mit dieser einen Winkel von wenigstens 30° oder wenigstens 60° einschließt.

Der Drehgreifer kann eine Abschirmung aufweisen oder das Gehäuse kann eine Abschirmung ausbilden, die einen Sensorbereich, innerhalb dem der Magnetfeldsensor angeordnet ist, in Umfangsrichtung bezüglich der Rotationsachse umgreift und/oder die den Sensorbereich an einer von dem Magneten abgewandten Seite des Sensorbereichs abschließt, wobei die Abschirmung durch ein Material mit einer relativen magnetischen Permeabilität von wenigsten 300 gebildet ist. Der Sensorbereich kann insbesondere dem obig erläuterten weiteren Aufnahmeraum entsprechen, der durch die zweite Gehäusekomponente abgeschlossen wird. Diese kann insbesondere die erläuterte Abschirmung bilden.

Die angegebene Permeabilitätsgrenze bedeutet, dass es sich um eine ferromagnetische Abschirmung handelt. Vorzugsweise wird als Material der Abschirmung ein Material mit höherer magnetsicher Permeabilität, zum Beispiel mit einer relativen magnetischen Permeabilität von zumindest 700 oder mehr als 1.000 oder mehr als 10.000, verwendet. Durch die Abschirmung werden externe Felder im Wesentlichen in alle Richtungen abgeschirmt, aus denen keine Felderfassung zur Erfassung der Feldlinien des Magneten des Drehgreifers selbst erfolgen soll. Hierdurch kann der Einfluss von drehgreiferexternen Störquellen, beispielsweise von Magneten von Linearmotoren, auf die Erfassung der Greif- und Rotationsinformation deutlich verringert werden.

Um den Verlauf der Magnetfeldlinien des Magnet durch die Abschirmung möglichst wenig zu beeinträchtigen beziehungsweise um möglichst wenige der Feldlinien aufgrund der Abschirmung an dem Sensor vorbeizuführen, ist es vorteilhaft, wenn ein gewisser Mindestabstand zwischen dem Magnetfeldsensor und jenem Teil der Abschirmung, die den Sensorbereich an der von dem Magneten abgewandten Seite abschließt, eingehalten wird. Dieser Mindestabstand kann so gewählt sein, dass er vergleichbar mit dem bei Ausnutzung des Verschiebepfades maximal möglichen Abstand zwischen Magnet und Magnetfeldsensor ist, beispielsweise wenigstens 20% dieses Abstands, wenigstens 50% dieses Abstands, oder wenigstens gleich groß wie dieser Abstand.

Zumindest der oder ein Abschnitt des Betätigungsmittels kann in dem oder einem durch das oder ein Gehäuse des Drehgreifers gebildeten Aufnahmeraum aufgenommen sein, wobei die Verschiebung des Betätigungsmittels entlang dem Verschiebepfad derart begrenzt ist, dass der Magnet in allen Verschiebestellungen des Betätigungsmittels innerhalb des Aufnahmeraums angeordnet ist, wobei der Aufnahmeraum in Umfangsrichtung bezüglich der Rotationsachse durch das oder ein Material begrenzt ist, das eine relative magnetische Permeabilität von wenigstens 300 aufweist.

Die Begrenzung des Aufnahmeraums kann insbesondere durch die obig erläuterte erste Gehäusekomponente gebildet sein, die aufgrund der Materialwahl als Abschirmung wirken kann. Das Material ist, wie das Material der obig erläuterten Abschirmung, ein ferromagnetisches Material und es wird, wie ebenfalls obig erläutert, vorzugsweise ein Material mit einer noch höheren magnetischen Permeabilität genutzt. Beispielsweise können die obig erläuterte Abschirmung und die Begrenzung des Aufnahmeraums durch das gleiche Material gebildet sein. Durch die Begrenzung des Aufnahmeraums durch ein ferromagnetisches Material wird ein Eintrag von externen Störfeldern aus dem Bereich seitlich des Magneten beziehungsweise des Verschiebepfades im Wesentlichen vollständig unterdrückt. Die Abschirmung des Magnetfeldsensors gegenüber Störfeldern kann somit weiter verbessert werden.

Die Verarbeitungseinrichtung des Drehgreifers kann dazu eingerichtet sein, einerseits in Anhängigkeit der erfassten Komponenten der magnetischen Flussdichte ein Maß für einen Betrag entweder der magnetischen Flussdichte, oder der in die durch die Raumrichtungen aufgespannte Ebene projizierten magnetischen Flussdichte zu ermitteln und die Greifinformation in Abhängigkeit dieses Maßes zu ermitteln, und/oder andererseits ein Verhältnis der erfassten Komponenten der magnetischen Flussdichten oder zweier dieser Komponenten zu ermitteln und die Rotationsinformation in Abhängigkeit dieses Verhältnisses zu ermitteln.

Wie bereits erläutert wurde, korreliert die Greifbewegung der Greifbacken mit der Stellung des Betätigungsmittels entlang dem Verschiebepfad und somit mit dem Abstand zwischen Magnet und Magnetfeldsensor. Da der Betrag der magnetischen Flussdichte monoton mit dem Abstand des Magneten zum Magnetfeldsensor fällt, ist dieser Betrag ein gutes Maß für den Abstand.

Sollte dieser Abstand für beliebige relative Orientierungen von Magnet und Magnetfeldsensor ermittelt werden, müssten Komponenten der magnetischen Flussdichte für drei Raumrichtungen, die nicht in einer Ebene liegen, erfasst werden. Im erläuterten Drehgreifer kann aufgrund der eingeschränkten Bewegungsfreiheitsgrade jedoch zumindest näherungsweise davon ausgegangen werden, dass sich der Winkel zwischen der Richtung der Feldlinien des Magneten und einer Ebene senkrecht zur Rotationsachse im Bereich des Magnetfeldsensors zumindest näherungsweise nicht ändert. Daher kann es ausreichen, Komponenten für zwei Raumrichtungen, die insbesondere in dieser Ebene liegen können, zu berücksichtigen.

Zur Berechnung des Betrages der magnetischen Flussdichte beziehungsweise der projizierten magnetischen Flussdichte ist die Wurzel der Summe der Quadrate der Komponenten zu berechnen. Zur Reduzierung des Rechenaufwands und somit beispielsweise der Kosten der Verarbeitungsrechnung beziehungsweise von deren Energieverbrauch, kann statt einer recht komplexen Wurzelberechnung jedoch beispielsweise unmittelbar die Summe der Komponentenquadrate als Maß für den Betrag der magnetischen Flussdichte herangezogen werden. Ein solches Maß beziehungsweise der Betrag kann dann beispielsweise mit Hilfe einer Look-Up-Tabelle oder durch Berechnung eines analytischen Zusammenhangs in den Abstand beziehungsweise die Greifstellung umgerechnet werden.

Bezüglich der Ermittlung der Rotationsinformation wird zunächst beispielhaft davon ausgegangen, dass die Raumrichtungen, für die Komponenten der magnetischen Flussdichte erfasst werden, senkrecht aufeinander stehen und in einer Ebene liegen, die senkrecht auf der Rotationsachse steht. In diesem Fall entspricht der Tangens des Drehwinkel dem Verhältnis der Komponenten. Der Drehwinkel kann somit ohne Weiteres aus diesem Verhältnis berechnet werden beziehungsweise beispielsweise mit Hilfe einer Look-Up-Tabelle ermittelt werden.

Diese Berechnung lässt sich entsprechend auf die Erfassung von Komponenten in einem schiefwinkligen Koordinatensystem beziehungsweise für Raumrichtungen, die schräg zur genannten Ebene stehen, übertragen. Allgemein kann jedoch auch in diesen Fällen unmittelbar aus dem Verhältnis ein Rotationswinkel ermittelt werden, beispielsweise mit Hilfe einer geeigneten Look-Up-Tabelle.

Weitere Vorteile und Einzelheiten der Erfindung ergeben sich aus den folgenden Ausführungsbeispielen und den zugehörigen Zeichnungen. Hierbei zeigen schematisch:
- Fig. 1: ein Ausführungsbeispiel eines erfindungsgemäßen Drehgreifers, und
- Fig. 2: zur Ermittlung der Rotations- und Greifinformation relevante Datenstrukturen.

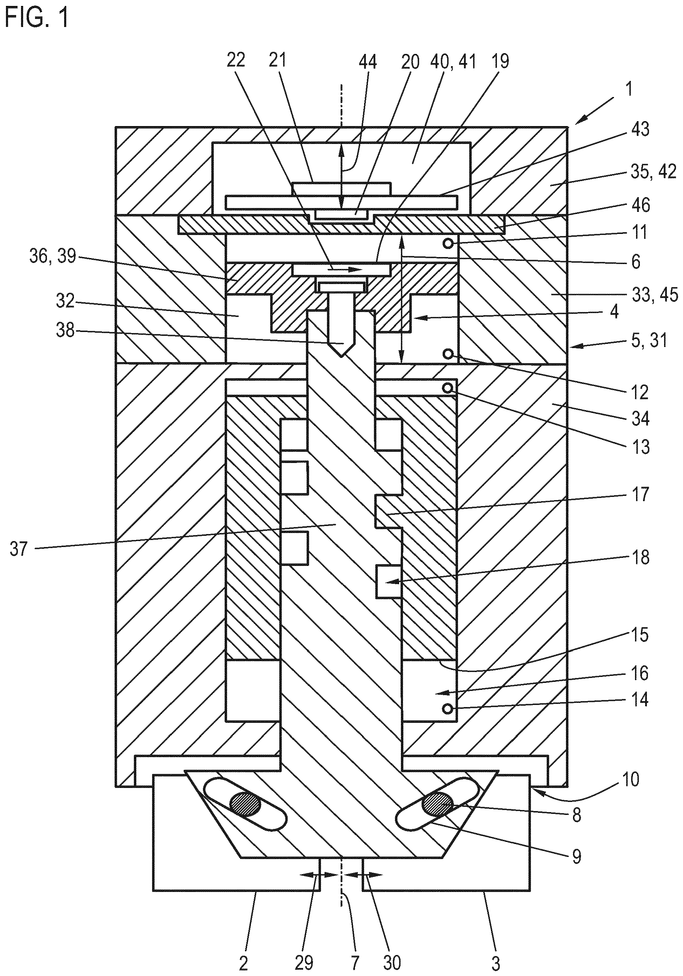

Fig. 1 zeigt einen Drehgreifer 1 mit zwei Greifbacken 2, 3, die einerseits in Querrichtung in Fig. 1 in zueinander entgegengesetzte Richtungen verschiebbar sind, wie durch die Pfeile 29, 30 dargestellt ist, um eine Greifbewegung durchzuführen beziehungsweise einen Gegenstand zwischen den Greifbacken 2, 3 zu klemmen, und andererseits gemeinsam um die Rotationsachse 7 rotierbar sind. Beide Bewegungsfreiheitsgrade werden durch ein gemeinsames Betätigungsmittel 4 implementiert, das durch ein Lagermittel 5, das im Beispiel durch ein Gehäuse 31 des Drehgreifers 1 gebildet ist, entlang einem Verschiebepfad 6 linear verschiebbar und um eine parallel zu dem Verschiebepfad 6 verlaufende Rotationsachse 7 rotierbar gelagert ist.

Das Betätigungsmittel 4 ist hierbei derart mit den Greifbacken 2, 3 gekoppelt, dass eine Verschiebung des Betätigungsmittels 4 entlang dem Verschiebepfad 6 zu einer zueinander entgegengesetzten Bewegung der Greifbacken 2, 3 führt. Dies wird dadurch erreicht, dass die Greifbacken über eine Zwangsführung 10 an dem Gehäuse 31 befestigt ist, die eine Verschiebung der Greifbacken 2, 3 in Hochrichtung in Fig. 1 blockiert. Zugleich weisen die Greifbacken 2, 3 jeweils eine Strebe auf, die eine jeweilige Durchbrechung 9 des Betätigungsmittels 4 durchsetzt. Die Durchbrechungen 9 erstreckt sich hierbei gewinkelt zur Rotationsachse 7 beziehungsweise dem Verschiebepfad 6, so dass eine Verschiebung des Betätigungsmittels 4 in Hochrichtung in Fig. 1 aufgrund der Zwangsführung 10 und der Zwangsführung durch die Durchbrechung 9 zu einer Bewegung der Greifbacken 2, 3 senkrecht zur Rotationsachse 7 führt, wie sie durch die Pfeile 29, 30 dargestellt ist. Diese Kopplung führt auch dazu, dass eine Rotation des Betätigungsmittels 4 zu einer Rotation der Greifbacken 2, 3 um die Rotationsachse 7 führt.

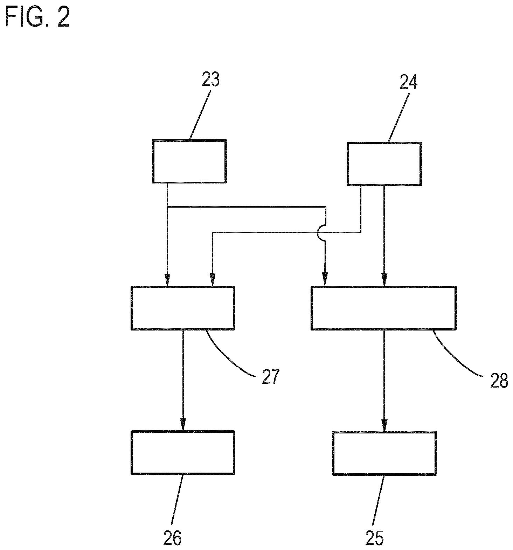

Um einerseits eine die Rotation der Greifbacken 2, 3 betreffende Rotationsinformation 25 und andererseits eine die Greifstellung der Greifbacken 2, 3 betreffende Greifinformation 26 zu ermitteln, weist der Drehgreifer 1 einen Magnet 19, einen Magnetfeldsensor 20 und eine Verarbeitungseinrichtung 21 auf. Der Magnetfeldsensor 20 und die Verarbeitungseinrichtung 21 werden im Beispiel durch eine gemeinsame Platine 43 getragen. Zur Reduzierung von Vibrationen kann es zweckmäßig sein, den Magnetfeldsensor 20 zwischen der Platine 42 und der Seitenwand 46 einzuklemmen, wobei z.B. auch eine Wärmeleitfolie oder ähnliches zum Toleranzausgleich zwischen der Seitenwand 46 und dem Magnetfeldsensor 20 angeordnet sein kann. Die Ermittlung der genannten Größen wird mit zusätzlichem Bezug auf Fig. 2 näher erläutert.

Der Magnet 19 ist im Beispiel an der von den Greifbacken 2, 3 abgewandten Stirnfläche des Betätigungsmittels 4 angebracht, beispielsweise dort angeklebt, und weist eine Magnetisierungsrichtung 22 auf, die gewinkelt, im Beispiel senkrecht, zu der Rotationsachse 7 verläuft. Zumindest zwei Komponenten der magnetischen Flussdichte des Magnetfelds des Magneten 19 werden durch den Magnetfeldsensor 20 erfasst. Wie bereits im allgemeinen Teil erläutert wurde, kann es unter Umständen vorteilhaft sein, einen Magnetfeldsensor 20 zu nutzen, der Komponenten für drei Raumrichtungen erfasst. Im Beispiel wird jedoch davon ausgegangen, dass nur zwei Komponenten der magnetischen Flussdichte für Raumrichtungen erfasst werden, die senkrecht zueinander und senkrecht auf der Rotationsachse 7 stehen.

Wie in Fig. 2 schematisch dargestellt ist, kann aus den beiden erfassten Komponenten 23, 24 der magnetischen Flussdichte im Bereich des Magnetfeldsensors 20 ein Maß 27 für den Betrag der Projektion der magnetischen Flussdichte in die Ebene senkrecht zur Rotationsachse 7 ermittelt werden. Das Maß kann unmittelbar der Betrag sein, der als Wurzel der Komponentenquadrate berechnet werden kann, oder es kann zur Vereinfachung der Berechnung als Maß beispielsweise nur die Summe der Komponentenquadrate herangezogen werden.

Der Betrag und somit das Maß 27 ist ein gutes Maß für den Abstand zwischen Magnet 19 und Magnetfeldsensor 20 und somit für die Position des Magnets 19 und somit des Betätigungsmittels 4 entlang dem Verschiebepfad 6 und somit wiederum für die Greifstellung der Greifbacken 2, 3. Es ist nämlich bekannt, dass der Betrag der magnetischen Flussdichte an einem Ort streng monoton vom Abstand zur Feldquelle, also im Drehgreifer 1 vom Abstand zum Magneten 19, abhängt.

Soll der Betrag aus Komponenten der magnetischen Flussdichte ermittelt werden, wäre es im Allgemeinen erforderlich, Komponenten der magnetischen Flussdichte für drei Raumrichtungen zu erfassen. Bei der gezeigten Geometrie des Drehgeifers 1 kann jedoch davon ausgegangen werden, dass die Feldlinien des Magneten 19 im Bereich des Magnetfeldsensors 20 näherungsweise senkrecht auf der Rotationsachse stehen beziehungsweise zumindest davon, dass sich der Winkel zwischen den Feldlinien und der senkrecht zur Rotationsachse 7 stehenden Ebene, in der die Raumrichtungen, für die Komponenten der magnetischen Flussdichte erfasst werden, liegen, nicht ändert. Unter dieser Annahme skaliert der Betrag der in die genannte Eben projizierten magnetischen Flussdichte genauso wie der gesamte Betrag der magnetischen Flussdichte, so dass auch dieser Betrag der projizierten magnetischen Flussdichte beziehungsweise das Maß 27 für diesen Betrag ein gutes Maß für die Greifinformation 26 darstellt, die somit, beispielsweise mit Hilfe einer Look-up-Tabelle oder eines vorab ermittelten analytischen Zusammenhangs, unmittelbar aus dem Maß 27 für den Betrag ermittelt werden kann.

Eine Rotation des Betätigungsmittels 4 um die Rotationsachse 7 führt hingegen dazu, dass sich ausschließlich die Richtung der Feldlinien, mit der diese den Magnetfeldsensor 20 durchsetzen, ändert. Somit entspricht das Verhältnis 28 der beiden erfassten Komponenten 23, 24 dem Tangens des Drehwinkels des Betätigungsmittels 4 um die Rotationsachse 7, womit hieraus unmittelbar die Rotationsinformation 25 ermittelt werden kann.

Durch die beschriebene Integration des Magneten 19 und des Magnetfeldsensors 20 in dem Drehgreifer 1 sind keine separaten Komponenten mehr erforderlich, um die Rotationsinformation 25 und die Greifinformation 26 zu ermitteln, womit der Aufbau von Maschinen bzw. Anlagen, die den Drehgreifer 1 umfassen, erheblich erleichtert werden kann. Zugleich kann das Gehäuse 31 des Drehgreifers 1 mitgenutzt werden, um potentiell störende externe Magnetfelder abzuschirmen, wodurch auch in Nutzungssituationen, in denen starke Streufelder auftreten, beispielsweise bei einer Nutzung im Bereich von Linearmotoren, eine robuste Erfassung der Rotationsinformation 25 und der Greifinformation 26 möglich ist. Verschiedene Ansätze zur Nutzung der Rotationsinformation 25 und der Greifinformation 26 wurden bereits im allgemeinen Teil erläutert.

Im gezeigten Beispiel erfolgt die Bewegung und Rotation des Betätigungsmittels 4 pneumatisch. Das von den Greifbacken 2, 3 abgewandte Ende des Betätigungsmittels 4 ist in einem Aufnahmeraum 32 beziehungsweise einer Druckkammer angeordnet, die gemeinsam durch die Seitenwand 46 und die Gehäusekomponenten 33, 34 begrenzt wird. Diese Druckkammer wird durch das kolbenartig ausgebildete Betätigungsmittel 4 in zwei Teilkammern unterteilt, die durch einen jeweiligen Druckluftkanal 11, 12 mit Druck beaufschlagbar sind. Durch Druckbeaufschlagung des Druckluftkanals 11 kann das Betätigungsmittel 4 somit in der Figur nach unten verschoben werden und durch Druckluftbeaufschlagung des Druckluftkanals 12 in der Figur nach oben. Zwischen dem Betätigungsmittel 4 und der durch die Gehäusekomponente 33 gebildeten Seitenwände sind typischerweise Dichtmittel angeordnet, die aus Übersichtlichkeitsgründen nicht dargestellt sind. Auch weitere Dichtmittel, die typischerweise zwischen verschiedenen Bauteilen angeordnet sind, sind in Fig. 1 aus Übersichtlichkeitsgründen nicht dargestellt, da die Ausgestaltung der Dichtungen für den Erfindungskern nicht relevant ist.

Die Rotation des Betätigungsmittels 4 ist ebenfalls pneumatisch aktuiert. Hierfür bildet die Gehäusekomponente 34 eine weitere Druckkammer 16 aus, in der ein Kolben 15 verschiebbar gelagert ist. Durch Druckbeaufschlagung der Druckluftkanäle 13, 14 kann der Kolben 15 in der Figur nach oben beziehungsweise nach unten verschoben werden. Der Kolben 15 weist einen Vorsprung 17 auf, der in ein Gewinde 18 des Betätigungsmittels 4 eingreift, womit eine Verschiebung des Kolbens 15 zu einer Rotation des Betätigungsmittels 4 führt. Durch nicht gezeigte Führungsmittel ist der Kolben 15 hierbei gegen Verdrehung gesichert.

Das von den Greifbacken 2, 3 abgewandte Ende des Betätigungsmittels 4 ist aus einem Material 39 gebildet, das eine geringe magnetische Permeabilität aufweist, beispielsweise aus Messing. Hierdurch wird vermieden, dass die Feldlinien des Magneten 19 durch das Betätigungsmittel 4 zur Gehäusekomponente 33 hingeleitet werden, was bei der später noch erläuterten Ausgestaltung der Gehäusekomponenten 33, 35 aus einem ferromagnetischen Material, dazu führen würde, dass ein Großteil des Feldes am Magnetfeldsensor 20 vorbeigeführt wird. Um den in der Figur unteren Abschnitt des Betätigungsmittels 4 aus einem anderen Material bilden zu können, ist das Betätigungsmittel 4 aus zwei Teilelementen 36, 37 gebildet, die über eine Schraubverbindung 38 verbunden sind.

Wie bereits im allgemeinen Teil erläutert wurde, ist es insbesondere bei einer Ausgestaltung des Aufnahmeraums 32 für das in der Figur oberen Endes des Betätigungsmittels 4 als Druckkammer für eine pneumatische Betätigung vorteilhaft, den Magnetfeldsensor 20 außerhalb dieses Aufnahmeraums 32 anzuordnen. Daher ist der Magnetfeldsensor 20 im Beispiel durch die Seitenwand 46 von dem Aufnahmeraum 32 separiert. Um dennoch eine im Wesentlichen unbeeinträchtigte Erfassung des Magnetfelds des Magneten 19 durch den Magnetfeldsensor 20 zu ermöglichen, ist die Seitenwand 46 aus einem Material mit einer relativen magnetischen Permeabilität nahe eins gebildet. Im Beispiel besteht die Seitenwand 46 aus Aluminium.

Durch die Gehäusekomponente 35 wird gemeinsam mit der Seitenwand 46 ein weiterer Aufnahmeraum 40 beziehungsweise Sensorbereich 41 begrenzt, der den Magnetfeldsensor 20 aufnimmt. Die Gehäusekomponente 35 ist aus einem ferromagnetischen Material, beispielsweise aus Stahl, gebildet und wirkt somit als Abschirmung 42, die den Sensorbereich einerseits in Umfangsrichtung bezüglich der Rotationsachse 7 umgreift und andererseits an der von dem Magneten 19 abgewandten Seite abschließt.

Um eine Störung der Feldlinien im Bereich des Magnetfeldsensors 20 zu vermeiden, ist es vorteilhaft, hierbei einen gewissen Mindestabstand 44 zwischen dem von dem Magneten 19 abgewandten Abschnitt des Gehäuses 31 beziehungsweise der Gehäusekomponente 35 und dem Magnetfeldsensor 20 einzuhalten. Der Mindestabstand 44 sollte nicht allzu viel kleiner sein als der maximal innerhalb des Verschiebepfads 6 mögliche Abstand zwischen Magnetfeldsensor 20 und Magnet 19.

Vorzugsweise ist auch die Gehäusekomponente 33 aus einem ferromagnetischen Material gebildet und wirkt somit als Abschirmung 42 in jenem Bereich, in dem der Magnet 19 verschiebbar ist. Das Gehäuse 31 beziehungsweise die Gehäusekomponenten 33, 35 wirken somit zugleich als Abschirmung 42, 45, wodurch die Rotationsinformation 25 und die Greifinformation 26 auch bei einem Vorhandensein von störenden Fremdfeldern im Bereich des Drehgreifers 1 mit hoher Genauigkeit erfasst werden können.

## Patentansprüche

1. Drehgreifer mit zwei Greifbacken (2, 3) und einem Betätigungsmittel (4), das durch ein Lagermittel (5), das insbesondere durch ein Gehäuse (31) gebildet ist, entlang einem Verschiebepfad (6) linear verschiebbar und um eine parallel zu dem Verschiebepfad (6) verlaufende Rotationsachse (7) rotierbar gelagert ist, wobei das Betätigungsmittel (4) mit den Greifbacken (2, 3) derart bewegungsgekoppelt ist, dass die Greifbacken (2, 3) bei einer Verschiebung des Betätigungsmittels (4) entlang dem Verschiebepfad (6) in zueinander entgegengesetzte Richtungen verschoben und/oder verschwenkt werden, um verschiedene Greifstellungen einzunehmen, und dass eine Rotation des Betätigungsmittels (4) um die Rotationsachse (7) zu einer gemeinsamen Rotation der Greifbacken (2, 3) um die Rotationsachse (7) führt,
**dadurch gekennzeichnet,**
**dass** der Drehgreifer (1) einen Magneten (19), einen Magnetfeldsensor (20) und eine Verarbeitungseinrichtung (21) aufweist, wobei der Magnet (19) derart an dem Betätigungsmittel (4) angebracht ist, dass seine Magnetisierungsrichtung (22) gewinkelt, insbesondere senkrecht, zur Rotationsachse (7) verläuft, wobei der Magnetfeldsensor (20) derart ortsfest bezüglich des Lagermittels (5) angeordnet ist, dass durch den Magnetfeldsensor (20) das Magnetfeld des Magneten (19) erfassbar ist, wobei der Magnetfeldsensor (20) zur Erfassung von Komponenten (23, 24) der magnetischen Flussdichte des Magnetfelds für zumindest zwei Raumrichtungen eingerichtet ist, wobei die Verarbeitungseinrichtung (21) dazu eingerichtet ist, in Abhängigkeit der erfassten Komponenten (23, 24) der magnetischen Flussdichte eine einen Drehwinkel der gemeinsamen Rotation der Greifbacken (2, 3) betreffende Rotationsinformation (25) und eine die Greifstellung betreffende Greifinformation (26) zu ermitteln.

2. Drehgreifer nach Anspruch 1,
**dadurch gekennzeichnet,**
**dass** sich das Betätigungsmittel (4) von einem mit den Greifbacken (2, 3) gekoppelten Ende in Richtung des Verschiebepfades (6) bis zu einem von den Greifbacken (2, 3) abgewandten Ende erstreckt, wobei der Magnet (19) an dem von den Greifbacken (2, 3) abgewandten Ende des Betätigungsmittels (4) angeordnet ist, und insbesondere an einer von den Greifbacken (2, 3) abgewandten Stirnfläche des Betätigungsmittels (4) angeordnet ist.

3. Drehgreifer nach Anspruch 2,
**dadurch gekennzeichnet,**
**dass** das Betätigungsmittel (4) zumindest an seinem von den Greifbacken abgewandten Ende aus einem Material (39) gebildet ist, das eine relative magnetische Permeabilität von weniger als 4 oder weniger als 2 oder weniger als 1,5 aufweist.

4. Drehgreifer nach einem der vorangehenden Ansprüche,
**dadurch gekennzeichnet,**
**dass** der Magnetfeldsensor (20) an einer von den Greifbacken (2, 3) abgewandten Seite des Betätigungsmittels (4) und in Richtung des Verschiebepfades (6) von dem Betätigungsmittel (4) beabstandet angeordnet ist.

5. Drehgreifer nach einem der vorangehenden Ansprüche,
**dadurch gekennzeichnet,**
**dass** zumindest ein Abschnitt des Betätigungsmittels (4) in einem durch das oder ein Gehäuse (31) des Drehgreifers (1) gebildeten Aufnahmeraum (32) aufgenommen ist, wobei der Magnetfeldsensor (20) an einer von dem Aufnahmeraum (32) abgewandten Seite einer Seitenwand (46) des Aufnahmeraums (32) angeordnet ist, wobei die Seitenwand (46) zumindest abschnittsweise aus einem Material gebildet ist, das eine relative magnetische Permeabilität von weniger als 4 oder weniger als 2 oder weniger als 1,5 aufweist.

6. Drehgreifer nach Anspruch 5,
**dadurch gekennzeichnet,**
**dass** das oder ein Gehäuse (31) des Drehgreifers (1) eine erste Gehäusekomponente (33) aufweist, in die das Betätigungsmittel (4) eingreift und die gemeinsam mit der als separates Bauteil ausgebildeten Seitenwand (46) den Aufnahmeraum (32) begrenzt, wobei an der von dem Aufnahmeraum (32) abgewandten Seite der Seitenwand (46) durch eine zweite Gehäusekomponente (35) gemeinsam mit der Seitenwand (46) ein weiterer Aufnahmeraum (40) begrenzt wird, der den Magnetfeldsensor (20) aufnimmt.

7. Drehgreifer nach einem der vorangehenden Ansprüche,
**dadurch gekennzeichnet,**
**dass** der Verschiebepfad (6) in einem Winkel von wenigstens 30° oder wenigstens 60°, insbesondere senkrecht, zu einer Ebene verläuft, die durch die Raumrichtungen oder zwei der Raumrichtungen, für die Komponenten (23, 24) des Magnetfeldes durch den Magnetfeldsensor (20) erfassbar sind, aufgespannt wird.

8. Drehgreifer nach einem der vorangehenden Ansprüche,
**dadurch gekennzeichnet,**
**dass** er eine Abschirmung (42) aufweist oder dass das Gehäuse (31) eine Abschirmung (42) ausbildet, die einen Sensorbereich (41), innerhalb dem der Magnetfeldsensor (20) angeordnet ist, in Umfangsrichtung bezüglich der Rotationsachse (7) umgreift und/oder die den Sensorbereich (41) an einer von dem Magneten (19) abgewandten Seite des Sensorbereichs (41) abschließt, wobei die Abschirmung (42) durch ein Material mit einer relativen magnetischen Permeabilität von wenigstens 300 gebildet ist.

9. Drehgreifer nach einem der vorangehenden Ansprüche,
**dadurch gekennzeichnet,**
**dass** zumindest der oder ein Abschnitt des Betätigungsmittels (4) in dem oder einem durch das oder ein Gehäuse (31) des Drehgreifers (1) gebildeten Aufnahmeraum (32) aufgenommen ist, wobei die Verschiebung des Betätigungsmittels (4) entlang dem Verschiebepfad (6) derart begrenzt ist, dass der Magnet (19) in allen Verschiebestellungen des Betätigungsmittels (4) innerhalb des Aufnahmeraums (32) angeordnet ist, wobei der Aufnahmeraum (32) in Umfangsrichtung bezüglich der Rotationsachse durch das oder ein Material begrenzt ist, das eine relative magnetischen Permeabilität von wenigstens 300 aufweist.

10. Drehgreifer nach einem der vorangehenden Ansprüche,
**dadurch gekennzeichnet,**
**dass** die Verarbeitungseinrichtung (21) dazu eingerichtet ist, einerseits in Abhängigkeit der erfassten Komponenten (23, 24) der magnetischen Flussdichte ein Maß (27) für einen Betrag entweder der magnetischen Flussdichte oder der in die durch die Raumrichtungen aufgespannte Ebene projizierten magnetischen Flussdichte zu Ermitteln und die Greifinformation (26) in Abhängigkeit dieses Maßes (27) zu ermitteln, und/oder andersseits eine Verhältnis (28) der erfassten Komponenten (23, 24) der magnetischen Flussdichte oder zweier dieser Komponenten (23, 24) zu Ermitteln und die Rotationsinformation (25) in Abhängigkeit dieses Verhältnisses (28) zu ermitteln.

## Claims

1. Rotary gripper with two gripping jaws (2, 3) and an actuating means (4) which is mounted by a bearing means (5), in particular formed by a housing (31), such that it can be displaced linearly along the displacement path (6) and can be rotated about a rotational axis (7) which runs parallel to the displacement path (6), wherein the actuation means (4) is movement-coupled to the gripping jaws (2, 3) in such a way that the gripping jaws (2, 3) are displaced and/or pivoted in opposite directions in the case of a displacement of the actuating means (4) along the displacement path (6), in order to assume different gripping positions, and that a rotation of the actuating means (4) about the rotational axis (7) leads to a common rotation of the gripping jaws (2, 3) about the rotational axis (7), **characterized in that** the rotary gripper (1) has a magnet (19), a magnetic field sensor (20) and a processing device (21), wherein the magnet (19) is attached to the actuating means (4) in such a way that its magnetization direction (22) runs in an angled manner, in particular perpendicularly, with respect to the rotational axis (7), wherein the magnetic field sensor (20) is arranged in a stationary manner with regard to the bearing means (5) in such a way that the magnetic field of the magnet (19) can be detected by the magnetic field sensor (20), wherein the magnetic field sensor (20) is configured to detect components (23, 24) of the magnetic flux density of the magnetic field for at least two spatial directions, wherein the processing device (21) is configured to determine a rotational information item (25), relating to a rotary angle of the common rotation of the gripping jaws (2, 3), and a gripping information item (26), relating to the gripping position, in a manner which is dependent on the detected components (23, 24) of the magnetic flux density.

2. Rotary gripper according to Claim 1**, characterized in that** the actuating means (4) extends from an end, coupled to the gripping jaws (2, 3), in the direction of the displacement path (6) as far as an end which faces away from the gripping jaws (2, 3), wherein the magnet (19) is arranged at that end of the actuating means (4) which faces away from the gripping jaws (2, 3), and is arranged, in particular, on an end face, facing away from the gripping jaws (2, 3), of the actuating means (4).

3. Rotary gripper according to Claim 2**, characterized in that**, at least at its end which faces away from the gripping jaws, the actuating means (4) is formed from a material (39) which has a relative magnetic permeability of less than 4 or less than 2 or less than 1b**.**5**.**

4. Rotary gripper according to one of the preceding claims, **characterized in that** the magnetic field sensor (20) is arranged spaced apart from the actuating means (4) on a side, facing away from the gripping jaws (2, 3), of the actuating means (4) and in the direction of the displacement path (6).

5. Rotary gripper according to one of the preceding claims, **characterized in that** at least one portion of the actuating means (4) is received in a receiving space (32) which is formed by the or a housing (31) of the rotary gripper (1), wherein the magnetic field sensor (20) is arranged on a side, facing away from the receiving space (32), of a side wall (46) of the receiving space (32), wherein at least portions of the side wall (46) are formed from a material which has a relative magnetic permeability of less than 4 or less than 2 or less than 1.5.

6. Rotary gripper according to Claim 5, **characterized in that** the or a housing (31) of the rotary gripper (1) has a first housing component (33), into which the actuating means (4) reaches and which, together with the side wall (46) which is configured as a separate component, delimits the receiving space (32), wherein a further receiving space (40) which receives the magnetic field sensor (20) is delimited on that side of the side wall (46) which faces away from the receiving space (32) by a second housing component (35) together with the side wall (46).

7. Rotary gripper according to one of the preceding claims, **characterized in that** the displacement path (6) runs at an angle of at least 30° at least 60°, in particular perpendicularly, with respect to a plane which is defined by the spatial directions or two of the spatial directions, for which components (23, 24) of the magnetic field can be detected by the magnetic field sensor (20).

8. Rotary gripper according to one of the preceding claims, **characterized in that** it has a shield (42), or **in that** the housing (31) configures a shield (42) which reaches in the circumferential direction with regard to the rotational axis (7) around a sensor region (41), within which the magnetic field sensor (20) is arranged, and/or which closes off the sensor region (41) on a side, facing away from the magnet (19), of the sensor region (41), wherein the shield (42) is formed by a material with a relative magnetic permeability of at least 300.

9. Rotary gripper according to one of the preceding claims, **characterized in that** at least the or a portion of the actuating means (4) is received in the or a receiving space (32) which is formed by the or a housing (31) of the rotary gripper (1), wherein the displacement of the actuating means (4) along the displacement path (6) is limited in such a way that the magnet (19) is arranged within the receiving space (32) in all displacement positions of the actuating means (4), wherein the receiving space (32) is delimited in the circumferential direction with regard to the rotational axis by the or a material which has a relative magnetic permeability of at least 300.

10. Rotary gripper according to one of the preceding claims, **characterized in that** the processing device (21) is configured firstly to determine a measure (27) for a magnitude either of the magnetic flux density or of the magnetic flux density projected into the plane defined by the spatial directions, in a manner which is dependent on the detected components (23, 24) of the magnetic flux density, and to determine the gripping information item (26) in a manner which is dependent on this measure (27), and/or secondly to determine a ratio (28) of the detected components (23, 24) of the magnetic flux density or of two of these components (23, 24), and to determine the rotational information item (25) in a manner which is dependent on this ratio (28).

## Revendications

1. Pince rotative avec deux mâchoires de préhension (2, 3) et un moyen d'actionnement (4) qui est monté par un moyen de palier (5), qui est formé notamment par un boîtier (31), de manière à pouvoir être déplacé linéairement le long d'un chemin de déplacement (6) et à pouvoir tourner autour d'un axe de rotation (7) s'étendant parallèlement au chemin de déplacement (6), le moyen d'actionnement (4) étant couplé en mouvement avec les mâchoires de préhension (2, 3) de telle sorte que les mâchoires de préhension (2, 3) sont déplacées et/ou pivotées dans des directions opposées l'une à l'autre lors d'un déplacement du moyen d'actionnement (4) le long du chemin de déplacement (6) afin d'adopter différentes positions de préhension, et qu'une rotation du moyen d'actionnement (4) autour de l'axe de rotation (7) conduit à une rotation commune des mâchoires de préhension (2, 3) autour de l'axe de rotation (7),
**caractérisée en ce que**
la pince rotative (1) présente un aimant (19), un capteur de champ magnétique (20) et un dispositif de traitement (21), l'aimant (19) étant disposé sur le moyen d'actionnement (4) de telle sorte que sa direction d'aimantation (22) s'étend sous un angle, notamment perpendiculairement, à l'axe de rotation (7), le capteur de champ magnétique (20) étant agencé de manière fixe par rapport au moyen de palier (5) de telle sorte que le champ magnétique de l'aimant (19) peut être détecté par le capteur de champ magnétique (20), le capteur de champ magnétique (20) étant adapté pour détecter des composantes (23, 24) de la densité de flux magnétique du champ magnétique pour au moins deux directions de l'espace, le dispositif de traitement (21) étant adapté pour déterminer, en fonction des composantes détectées (23, 24) de la densité de flux magnétique, une information de rotation (25) concernant un angle de rotation de la rotation commune des mâchoires de préhension (2, 3) et une information de préhension (26) concernant la position de préhension.

2. Pince rotative selon la revendication 1, **caractérisée en ce que** le moyen d'actionnement (4) s'étend depuis une extrémité couplée aux mâchoires de préhension (2, 3) en direction du chemin de déplacement (6) jusqu'à une extrémité détournée des mâchoires de préhension (2, 3), l'aimant (19) étant agencé à l'extrémité du moyen d'actionnement (4) détournée des mâchoires de préhension (2, 3), et étant notamment agencé sur une face frontale du moyen d'actionnement (4) détournée des mâchoires de préhension (2, 3).

3. Pince rotative selon la revendication 2, **caractérisée en ce que** le moyen d'actionnement (4) est formé, au moins à son extrémité détournée des mâchoires de préhension, d'un matériau (39) qui présente une perméabilité magnétique relative inférieure à 4 ou inférieure à 2 ou inférieure à 1,5.

4. Pince rotative selon l'une quelconque des revendications précédentes, **caractérisée en ce que** le capteur de champ magnétique (20) est agencé sur un côté du moyen d'actionnement (4) détourné des mâchoires de préhension (2, 3) et à distance du moyen d'actionnement (4) dans la direction du chemin de déplacement (6).

5. Pince rotative selon l'une quelconque des revendications précédentes, **caractérisée en ce qu'**au moins une section du moyen d'actionnement (4) est reçue dans un espace de réception (32) formé par le ou un boîtier (31) de la pince rotative (1), le capteur de champ magnétique (20) étant agencé sur un côté, détourné de l'espace de réception (32), d'une paroi latérale (46) de l'espace de réception (32), la paroi latérale (46) étant formée, au moins par sections, d'un matériau qui présente une perméabilité magnétique relative inférieure à 4 ou inférieure à 2 ou inférieure à 1,5.

6. Pince rotative selon la revendication 5, **caractérisée en ce que** le ou un boîtier (31) de la pince rotative (1) présente un premier composant de boîtier (33) dans lequel s'engage le moyen d'actionnement (4) et qui délimite l'espace de réception (32) conjointement avec la paroi latérale (46) réalisée sous forme de composant séparé, un autre espace de réception (40), qui reçoit le capteur de champ magnétique (20), étant délimité par un deuxième composant de boîtier (35) conjointement avec la paroi latérale (46) sur le côté de la paroi latérale (46) détourné de l'espace de réception (32).

7. Pince rotative selon l'une quelconque des revendications précédentes, **caractérisée en ce que** le chemin de déplacement (6) s'étend selon un angle d'au moins 30° ou d'au moins 60°, notamment perpendiculairement à un plan qui est défini par les directions de l'espace ou deux des directions de l'espace pour lesquelles des composantes (23, 24) du champ magnétique peuvent être détectées par le capteur de champ magnétique (20).

8. Pince rotative selon l'une quelconque des revendications précédentes, **caractérisée en ce qu'**elle présente un blindage (42) ou **en ce que** le boîtier (31) réalise un blindage (42) qui entoure une zone de capteur (41) à l'intérieur de laquelle est agencé le capteur de champ magnétique (20) dans la direction circonférentielle par rapport à l'axe de rotation (7) et/ou qui ferme la zone de capteur (41) sur un côté de la zone de capteur (41) détourné de l'aimant (19), le blindage (42) étant formé par un matériau ayant une perméabilité magnétique relative d'au moins 300.

9. Pince rotative selon l'une quelconque des revendications précédentes, **caractérisée en ce qu'**au moins la ou une section du moyen d'actionnement (4) est reçue dans le ou un espace de réception (32) formé par le ou un boîtier (31) de la pince rotative (1), le déplacement du moyen d'actionnement (4) le long du chemin de déplacement (6) étant limité de telle sorte que l'aimant (19) est agencé à l'intérieur de l'espace de réception (32) dans toutes les positions de déplacement du moyen d'actionnement (4), l'espace de réception (32) étant délimité dans la direction circonférentielle par rapport à l'axe de rotation par le ou un matériau qui présente une perméabilité magnétique relative d'au moins 300.

10. Pince rotative selon l'une quelconque des revendications précédentes, **caractérisée en ce que** le dispositif de traitement (21) est adapté pour, d'une part, déterminer en fonction des composantes détectées (23, 24) de la densité de flux magnétique une mesure (27) d'un montant soit de la densité de flux magnétique, soit de la densité de flux magnétique projetée dans le plan défini par les directions de l'espace, et pour déterminer l'information de préhension (26) en fonction de cette mesure (27), et/ou d'autre part pour déterminer un rapport (28) des composantes détectées (23, 24) de la densité de flux magnétique ou de deux de ces composantes (23, 24) et déterminer l'information de rotation (25) en fonction de ce rapport (28).
